# EUROPEAN PATENT APPLICATION

(11) **EP 2 792 612 A1**
(43) Date of publication of application: **22.10.2014**
(21) Application number: 13164294.4
(22) Date of filing: 18.04.2013
(51) Int. Cl.: B65D 55/02

(54) **Cap for a liquid treatment cartridge and method of placing it on the liquid treatment cartridge**

(71) Applicant: BRITA Professional GmbH Co. KG, 65232 Taunusstein (DE)
(72) Inventor: Zöller, Jochen, 56355 Nastätten (DE)
(74) Representative: Meissner, Bolte & Partner GbR

(57) **Abstract**

A cap is configured for placement on a cartridge head part (8) of a liquid treatment cartridge (3). The cartridge head part (8) includes at least one of a liquid inlet port (14,15) and a liquid outlet port (13). The cartridge head part (8) is configured for insertion into a head part (2) of a liquid treatment system (1) to establish a liquid-tight connection between at least one of an inlet port and an outlet port of the head part (8) and a corresponding one of the ports (14,15,13) of the cartridge head part (8). The cap is configured to cover at least one of the ports (14,15) of the cartridge head part (8) when placed on the cartridge head part (8) with the cartridge head part inserted through an aperture of the cap in an axial direction. The cap is provided with a part (23-25) having at least one frangible connection to a remainder of the cap and including a section (25) configured to engage the liquid treatment cartridge (3) in a manner enabling it to exert an axial force opposing a force pulling the cap in the axial direction only if the at least one frangible connection is intact.

## Description

Cap for a liquid treatment cartridge and method of placing it on the liquid treatment cartridge.

The invention relates to a cap for placement on a cartridge head part of a liquid treatment cartridge,
wherein the cartridge head part includes at least one of a liquid inlet port and a liquid outlet port, and
wherein the cartridge head part is configured for insertion into a head part of a liquid treatment system to establish a liquid-tight connection between at least one of an inlet port and an outlet port of the head part and a corresponding one of the ports of the cartridge head part,
wherein the cap is configured to cover at least one of the ports of the cartridge head part when placed on the cartridge head part with the cartridge head part inserted through an aperture of the cap in an axial direction.

The invention also relates to a method of placing such a cap on a cartridge head part of a liquid treatment cartridge.

The invention also relates to a liquid treatment cartridge, including:
a cartridge head part,
wherein the cartridge head part includes at least one of a liquid inlet port and a liquid outlet port, and
wherein the cartridge head part is configured for insertion into a head part of a liquid treatment system to establish a liquid-tight connection between at least one of an inlet port and an outlet port of the head part and a corresponding one of the ports of the cartridge head part; and
a cap, placed over the cartridge head part so as to cover at least one the ports of the cartridge head part.

An example of such a liquid treatment cartridge with such a cap is sold under the name Purity C by the applicant and by Mavea LLC in the United States of America. The liquid treatment system of which the cartridge is a part is a water filter system for use in food and beverage environments. The system includes a filter head for permanent connection to a pressurised supply of water, e.g. the mains water supply, and to a conduit for supplying treated water to appliances such as coffee and espresso machines, hot and cold drink vending machines, as well as combi ovens and conventional steam ovens. The filter cartridges of the system reduce the carbonate hardness in drinking water, thus preventing limescale deposits in the downstream terminal equipment. They are designed to be locked into the filter head. A cartridge must be replaced once the stated capacity has been reached or no later than twelve months after commissioning, whichever occurs first. Typically, new cartridges are delivered to the premises of the user by service providers who take back used cartridges for recycling. The cartridges are provided with a protective cap that fits over the inlet and outlet ports of the cartridge through which water to be treated enters the cartridge and treated water leaves the cartridge, in use. The cap prevents moisture from entering an as yet unused cartridge, prevents damage to the seals surrounding the ports and prevents contamination of the cartridge contents. The cap placed on the cartridge and a section of the cartridge below the cap are shrink-wrapped with foil before the cartridge leaves the factory.

A problem for the cartridge supplier is that shrink-wrapping adds complexity to the manufacturing process. It is difficult to set the shrink-wrapping equipment correctly, and re-setting is required when an assembly line is switched to manufacturing cartridges of a different size. Incorrectly set equipment will result in holes in the wrapping, with incorrectly wrapped cartridges being treated as rejects.

It is an object of the invention to provide a cap, method and liquid treatment cartridge of the types mentioned above in the opening paragraphs that make the manufacturing process relatively flexible without making the work of the service provider more difficult.

This object is achieved according to a first aspect by the cap according to the invention, which is characterised in that the cap is provided with a part having at least one frangible connection to a remainder of the cap and including a section configured to engage the liquid treatment cartridge in a manner enabling it to provide an axial force opposing a force pulling the cap in the axial direction only if the at least one frangible connection is intact.

Because the cap is configured to cover such as to close at least one of the ports of the cartridge head part when placed on the cartridge head part, it is suitable for use both on used and as yet unused cartridges, in order to prevent liquid from spilling out of used cartridges. Because the cap is provided with a part having at least one frangible connection to the cap, it is possible to distinguish used from as yet unused cartridges. The or each frangible connection is irreversible, so that a broken connection will indicate a used cartridge. Because the part having the frangible connection includes a section for engaging the liquid treatment cartridge, the cap of a new cartridge can be fixed to the cartridge at the final manufacturing stage. The section is able to provide an axial force opposing a force pulling the cap in the axial direction, but only if the frangible connection is intact. Thus, upon at least the section's engaging the cartridge, it is not possible to move the cap in axial direction relative to the cartridge without rupturing the frangible connection. This removes the need to shrink-wrap the section of the cartridge at the end on which the cap is placed. It is possible to manufacture a range of cartridges of different capacity with which the same cap can be used. Provided the feature or features that the section of the part having the frangible connection engages is or are at the same location relative to the cartridge head part, equipment for combining the cap and the cartridge such that at least the part with the engaging section engages the cartridge need not be adjusted when an assembly line is switched from manufacturing cartridges with one capacity to cartridges with another capacity. This makes the manufacturing process more flexible. Moreover, compared to checking the integrity of shrink-wrapping, checking the connection between the separable part and the cap and checking that the cap engages the cartridge is relatively simple. Such connections are relatively easy to locate by an assembly line worker or by optical inspection equipment. Thus, compared to the previously prevailing practice of shrink-wrapping the upper part of cartridges, the cap and frangibly connected part make it possible to manufacture cartridges in a range of sizes on one assembly line with relatively few rejects.

In an embodiment, the cap includes at least one further feature for engaging the liquid treatment cartridge, for example a feature for engaging the liquid treatment cartridge, to exert an axial force opposing a force pulling the cap in the axial direction even if the frangible connection is broken.

The further feature may include one or more latching elements, for example.

The further feature or features allow the cap to be replaced on the cartridge head part after use of the liquid treatment cartridge without much risk of the cap's falling off accidentally.

In an embodiment, wherein the cap is configured for use with a liquid treatment cartridge having a central axis aligned with the axial direction,
the cap has an end wall for at least partially covering an axial end of the cartridge head part and at least one side wall depending from the end wall for at least partially covering the cartridge head part laterally,
wherein the separable part is connected to only one of the end wall and the at least one side wall and at least one of the other of the end wall and the side wall(s) is configured to cover at least one of the inlet and outlet ports in a liquid-tight-manner.

An effect is that at least the part having the frangible connection can remain attached to the cartridge head via an attachment section with little risk of interfering with the head part of the liquid treatment system. There is in particular a low risk of interference with the sealing mechanism providing liquid-tight seals around the inlet and outlet ports. This is because the attachment section will be connected to a surface of the cartridge head facing in a different direction to the inlet and outlet ports. In other embodiments, the wall in the plane of which the frangible connection lies may be weakened by the breaking of the frangible connection without affecting the sealing mechanism

In an embodiment, wherein the cap is configured for use with a liquid treatment cartridge having a central axis aligned with the axial direction,
the cap has an end wall for at least partially covering an axial end of the cartridge head part and at least one side wall depending from the end wall for at least partially covering the cartridge head part laterally, and
at least part of the separable part is integral to the end wall and connected to a remainder thereof along a line of connection.

An effect is that the part having the frangible connection can includes an attachment section that can remain attached to the cartridge head with little risk of interfering with the head part of the liquid treatment system, in particular the mechanism providing a releasable connection between the head part and the cartridge head. Features of such a connection mechanism are generally not provided on the end wall, since they must prevent axial movement of the cartridge out of the head part of the liquid treatment system.

Where the liquid treatment cartridge is provided with a base via which it can be supported on a surface, fixing the engaging section of the cap to the cartridge becomes relatively easy. Any pressure needed to establish the connection will be exerted in a generally axial direction. This applies in particular where the connection is provided by upsetting an end of a pin inserted through a hole in the section.

In an embodiment, the part is separable from the remainder of the cap and the section is an attachment section configured for retainment of at the attachment section to the liquid treatment cartridge.

There is thus a clean break between the separable part and the remainder of the cap. Moreover, it is easier to place the cap on the liquid treatment cartridge such that the frangible connection is broken by the mere act of removing the cap, but remains intact before that. This type of tamper-evident cap is also more suitable to use with a liquid treatment cartridge having a cartridge head part for insertion into a head part of a liquid treatment system. Compared to bottle closures including a strip extending around the neck of a bottle at a level below a surrounding ridge or bead, this variant does not require such a ridge or bead, since the attachment section is separable and retained to the liquid treatment cartridge, thus connected directly thereto. The lack of a surrounding ridge or bead means relatively little or no adaptation of the cartridge head part through the addition of features that could interfere with the head part of the liquid treatment system is required.

In an embodiment, the separable part includes an end section for providing purchase on the separable part and a section extending along a path and provided with frangible connections on either side along the path.

For many shapes of cartridge head part, it is not possible to provide a cap that is twisted off, because such rotational movement is not possible. Rather, the cap is pulled off by an essentially straight-line movement directed along a longitudinal axis of the cartridge. The separable part must be connected to the cap in such a way that it can withstand relatively high pulling forces on its way from the factory to the end user. On the other hand, it should not require a tremendous amount of effort to remove the cap when installing the cartridge. By pulling on the end section in a direction transverse to the lines of connection running on either side of the path, this section is separated by a kind of peeling motion, so that the pulling force is lower than that which would be required to pull the cap off. The location at which the connection between the separable part and the cap is broken moves along the path as the pulling force is exerted, until the separable part is completely detached from the cap.

The end section for providing purchase may protrude from the cap to make it easier to grab hold of it, e.g. with one's bare hands or with a tool such as pliers. The end section may form a gripping section. It may widen as seen in a direction away from a transition between the section extending along a path and the end section.

In a variant, the attachment section is separable from the section extending along the path at a frangible connection.

As a result, the attachment section can be relatively small. It need not, for example, extend around the cartridge head part in the manner of the types of caps commonly found on fizzy drinks bottle. This would for many configurations of existing liquid treatment systems be undesirable, because the cartridge head part would have to be lengthened to make sure that the parts retained on the cartridge do not interfere with the head part into which the cartridge head part is to be inserted. A smaller attachment section allows it to be placed at a location in which there is less likelihood of interference with the inside of the head part of the liquid treatment system. Furthermore, where there is a section provided for gripping the separable part, this can be larger, since it is pulled off anyway. This increases the ease of use of the cap.

In a variant, a further frangible connection is provided at the end of the path.

Thus, a major part of the separable part can be detached from both the cap and the cartridge. Moreover, the force required to pull off the separable part can remain small even as the location of detachment reaches the end of the path during the act of pulling off the separable part. The lateral extent (width) of the section extending along the path, i.e. its extent between the frangible connections on either side of the path will generally be quite small, so that that the length of the further frangible connection provided at the end of the path will also be quite small. A relatively low pulling force exerted in a direction transverse to the line of connection at the end of the path will suffice to detach the separable part completely.

In a variant, the section extending along a path is arranged to surround the attachment section.

This ensures that the connection between the attachment section and the rest of the separable part does not become the weakest link in the chain of connections holding the cap to the cartridge when it leaves the factory. Rather, the relatively long path provided by a loop around the attachment section means that a relatively large force is required to break the frangible connections instantaneously by pulling off the cap instead of pulling on the section extending along the spiral path by a kind of "peeling" movement.

In an embodiment, the attachment section is configured for being fixed, for example irreversibly fixed, to the liquid treatment cartridge.

It is thus practically impossible to remove the cap without breaking the connection between the cap and the separable part, such as might be the case if the attachment section were to be retained to the cartridge by means of a snap-fit connection. Furthermore, movement of the attachment section when a force is exerted on the separable section to detach it from the cap is prevented. This makes handling easier, since it suffices to exert a force on the separable part at one end. Irreversible fixing implies that it is not possible to separate the attachment section without destroying one or the other of the engaging parts of the attachment section and the cartridge. In one variant, the connection between the attachment section and the cartridge is a shape-lock, obtainable by deforming at least one of engaging parts of the cartridge and the attachment section. Additionally or alternatively, the connection may be a positive material joint, e.g. an adhesive bond, a welded joint or the like.

In a particular variant, the attachment section includes a hole for fixing the attachment section to the liquid treatment cartridge by upsetting a pin inserted through the hole.

This variant contributes to simplifying the cartridge production process. There is no need to use adhesives. Welding would also be more complicated, since it is not possible to provide a tool such as an anvil or sonotrode underneath the cap. The process of upsetting the pin leads to at least a shape-lock between the pin and the attachment section. Depending on the material of the cap and the pin, a positive material joint may be formed as well.

In an embodiment, at least part of the separable part is integral to a wall of the cap and connected to a remainder thereof along a line of connection, and

the attachment section is set back relative to at least an adjacent section of an outward-facing surface of the remainder of the wall.

In particular, the attachment section may be set back to a level beyond an inward-facing surface of at least an adjacent section of the remainder of the wall.

This allows the attachment section to be connected to the cartridge, in particular the cartridge head, within a recess in the cartridge head. Thus, the attachment section can remain connected to the cartridge and a remainder of the separable part be removed, and there will then be no projecting parts of the original separable part projecting from a surface of the cartridge head. This further helps avoid interference between the separable part and the head of the liquid treatment system.

According to another aspect, the method of placing a cap according to the invention on a cartridge head part of a liquid treatment cartridge involves the use of a cap of which the part having the frangible connection is separable from the remainder of the cap and the section is an attachment section configured for retainment of at least the attachment section to the liquid treatment cartridge, wherein the method further includes connecting the attachment section to the liquid treatment cartridge.

In an embodiment, the attachment section is irreversibly fixed to the liquid treatment cartridge.

It is thus practically impossible to pull the cap off the cartridge head without breaking at least one frangible connection. Furthermore, the separable part can be removed by exerting a force on one end, the fixed connection to the liquid treatment cartridge providing the counteracting force to ensure that the frangible connection or connections is or are broken. Compared to snap-fitting the separable part onto the liquid treatment cartridge, protruding ridges or the like on the cartridge head part are avoided.

In an embodiment, the attachment section is fixed to the liquid treatment cartridge by upsetting an end of a pin inserted through a hole in the attachment section.

The attachment section is in effect riveted to the cartridge. Compared to snap-fit connections this is a relatively sure way of providing an irreversible connection between the attachment section and the cartridge. It is therefore practically impossible to pull the cap off without breaking at least one frangible connection. Moreover, it is relatively easy to remove at least a section of the separable part by pulling, since the connection between the attachment section and the cartridge provides a counteracting retaining force in practically any direction. This is of particular use where the attachment section is also to be separated from a remainder of the separable part by breaking a frangible connection between the two. By, in effect, riveting that attachment section to the cartridge, fewer or at least less complicated tools are required than would be the case if the attachment section were, for example, welded or adhesively bonded to the cartridge.

In a particular variant, the pin is a pin moulded on the liquid treatment cartridge.

This further simplifies the manufacturing process. The pin will generally be a moulded part of the cartridge head. As the cartridge head comprises attachment features that can generally only be provided by moulding the cartridge head, moulding a pin does not add significantly to the complexity of the production process of the cartridge housing. Moreover, the cartridge head will generally be made of a thermoplastic material to enable it to be moulded. Thus, upsetting the end of the pin can be done with e.g. a heated tool or a sonotrode in a relatively uncomplicated manner.

According to another aspect, the liquid treatment cartridge according to the invention is characterised in that the cap is provided with a frangible connection between parts of the cap and engages the liquid treatment cartridge such as to allow removal of the cap only by breaking the frangible connection.

In a particular embodiment, the cap is a cap according to the invention.

The invention will be explained in further detail with reference to the accompanying drawings, in which:
Fig. 1 is a perspective view of a liquid treatment system including a head part and a liquid treatment cartridge;
Fig. 2 is a top perspective view of the liquid treatment cartridge at a stage before leaving the factory;
Fig. 3 is a detailed top perspective view of the liquid treatment cartridge at the stage shown in Fig. 2;
Fig. 4 is a detailed perspective view from a different direction of the liquid treatment cartridge at the stage shown in Figs. 2 and 3;
Fig. 5 is a perspective view of the liquid treatment cartridge with a cap placed on it;
Fig. 6 is a perspective view of the cap in a state before it is combined with the cartridge;
Fig. 7 is a detailed top perspective view of the cap in the state in which it is shown in Fig. 6;
Fig. 8 is a detailed bottom view of the cap in the state in which it is shown in Figs. 6 and 7;
Fig. 9 is a detailed top view of the cap in the state in which it is shown in Figs. 6-8;
Fig. 10 is a top perspective view of the liquid treatment cartridge with the cap placed on it; and
Fig. 12 is a top perspective view of the cartridge after a cap placed on it has been removed from it.

A liquid treatment system 1 as shown in the drawings includes a head part 2 and a liquid treatment cartridge 3. In the example to be described herein, the liquid to be treated is water. The liquid treatment cartridge 3 includes a housing containing one or more liquid treatment media.

In the example, the liquid treatment media include media for the treatment of liquid by sorption. In particular, the liquid treatment media include at least one ion exchange resin, more particularly a cation exchange resin. The cation exchange resin may be a weakly acidic cation exchange resin at least partly in the hydrogen form, optionally with added cation exchange resin loaded at least initially with potassium to regulate the acidity level of the treated water. The cation exchange resin in the hydrogen form is arranged to remove carbonate or temporary hardness from water passed through it. A fraction of the water passing through the liquid treatment system 1 bypasses the cation exchange resin in the hydrogen form. It is, however, led through the liquid treatment cartridge 3 and treated by a liquid treatment medium for the treatment of liquid by sorption, this medium including activated carbon. In other examples, the liquid treatment system 1 is alternatively or additionally configured to add components to the liquid, e.g. certain minerals.

The head part 2 includes an inlet connector 4 for connection to a supply conduit 5. The latter is connected to a source of pressurised water, e.g. the mains water supply. The head part 2 also includes an outlet connector 6 for connection to a delivery conduit 7. The delivery conduit 7 is arranged to supply treated liquid to an appliance at a point of use. This appliance may be an appliance for preparing a beverage, e.g. a coffee maker, carbonator, post-mix beverage appliance, water cooler or the like. It may also be a steamer or a dishwasher, for example. Although the inlet connector 4 and outlet connector 6 allow for disconnection of the head part 2 from the source of untreated water and the appliance arranged to process the treated water, the liquid treatment system 1 is configured to allow the head part 2 to remain connected whilst the liquid treatment cartridge 3 is replaced.

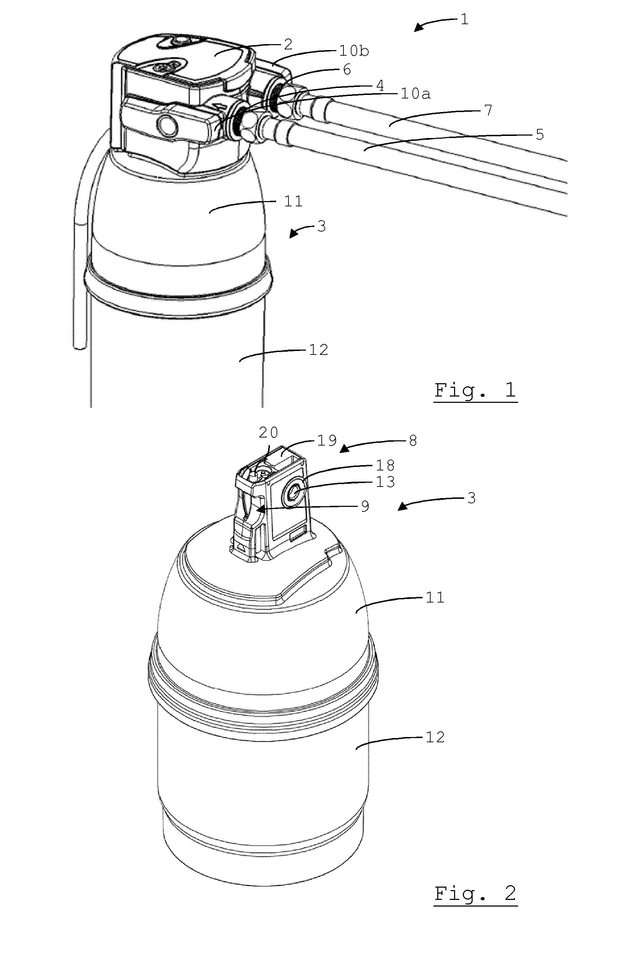

To this end, the liquid treatment cartridge 3 includes a cartridge head 8 (Fig. 2) at one end, for insertion into a recess of the head part 2. The cartridge head 8 and head part 2 are provided with co-operating parts (locking features 9 in the case of the liquid treatment cartridge 3 and a latch (not shown) in the case of the head part 2) of a locking mechanism for locking the liquid treatment cartridge 3 in place. The locking mechanism is operated by turning locking handles 10a,b (Fig. 1).

With reference to a central body axis (not shown), the cartridge head 8 is provided at one axial end of the liquid treatment cartridge 3. A base on which the liquid treatment cartridge 3 shown by way of example can stand is provided at the opposite axial end. The cartridge head 8 is inserted into the head part 2 with a generally axially directed movement.

The cartridge head 8 is an integrally moulded part of a cap 11, for example made of a thermoplastic material. In the process of manufacturing the liquid treatment cartridge 3, the cap 11 is combined with a beaker-shaped cartridge housing part 12 after the liquid treatment medium and flow guides (not shown) have been inserted into the beaker-shaped cartridge housing part 12. In particular, the two parts 11,12 are welded together.

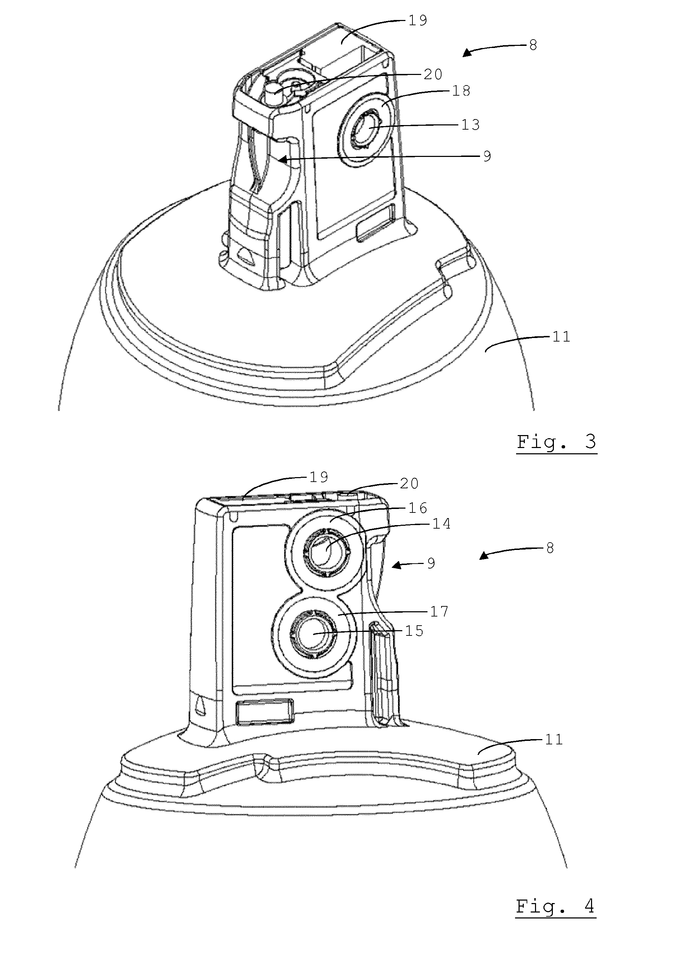

The cartridge head 8 shown here by way of example includes an outlet port 13 (Fig. 3) and two inlet ports 14,15 (Fig. 4) through which liquid leaves and enters the liquid treatment cartridge 3, respectively, when a liquid-tight connection between these ports 13-15 and respective ports (not shown) of the head part 2 has been established. The liquid to be treated is divided into two flows in the head part 2, one entering the liquid treatment cartridge 3 through a main inlet port 14 and the other entering through a bypass inlet port 15. The liquid entering through the bypass inlet port 15 bypasses the liquid treatment medium for removing carbonate hardness. The flows are combined within the liquid treatment cartridge 3, so that there is only one outlet port 13. Sealing elements 16-18 are provided to seal the ports 13-15.

It is observed that the outlet port 13 faces in a direction transverse to the central body axis and the inlet ports 14,15 face in an opposite direction transverse to the central body axis. The locking features 9 are provided laterally on yet another side of the cartridge head 8. The ports 13-15 and the locking features 9 are each provided at axial locations short of the axial end of the cartridge head 8 that coincides with the axial end of the liquid treatment cartridge 3. Because none of the ports 13-15 is provided in an axial end face 19 of the cartridge head 8, the locking mechanism locking the liquid treatment cartridge 3 does not have to withstand the pressure of the liquid.

The axial end face 19 includes a recessed part, within which an integrally moulded pin 20 is arranged.

Figs. 2-4 show the liquid treatment cartridge 3 at an intermediate stage in its production process, in which the pin 20 has an essentially circle-cylindrical shape and may protrude slightly with respect to the axial end face 19.

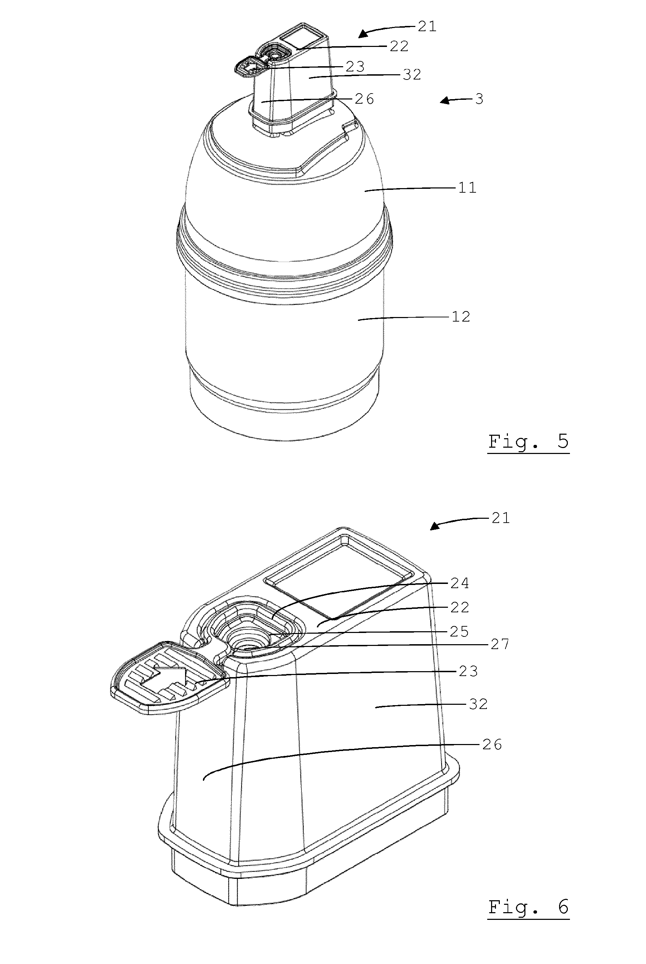

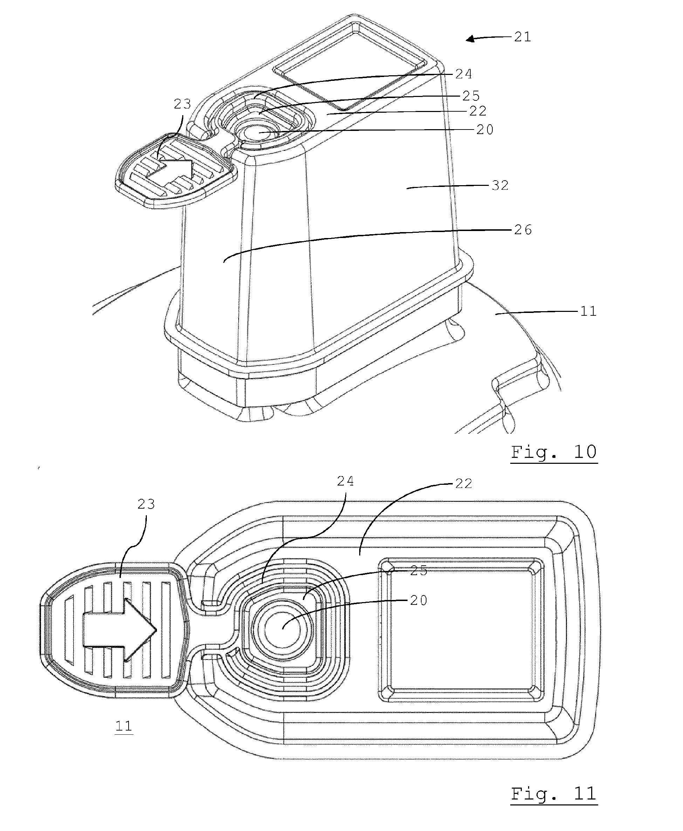

Before it leaves the factory, the liquid treatment cartridge 3 is provided with a protective cap 21, as shown in outline in Fig. 5 and in detail in Figs. 10 and 11. Figs. 6-9 show the protective cap 21 before it is placed on the cartridge head 8.

The protective cap 21 has a shape complimentary to that of the cartridge head 8. It includes an end wall 22 and side walls depending therefrom. Integral to the end wall 22 is a separable part including a gripping tab 23, a loop-shaped section 24 and an attachment section 25. The separable part is frangibly connected to the protective cap 21 such as to be separable from the protective cap 21.

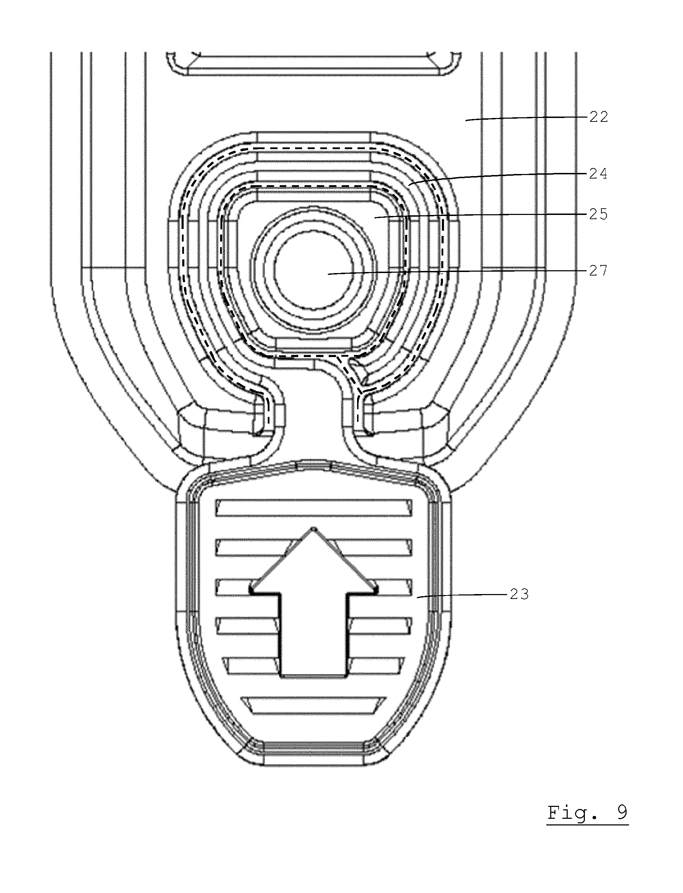

All frangible connections of the example are provided by lines of weakness shown as dashed lines in Fig. 9. The lines of weakness are in the shape of a pattern of reduced thickness in an injection-moulded part comprised of the protective cap 21 and the separable part. In alternative embodiments, one or more of these connections may be pre-scored or stamped into the composite part comprised of the protective cap 21 and the separable part.

The gripping tab 23 is configured for providing purchase on the separable part to a user grabbing hold of it. Several features facilitate this. First, the gripping tab 23 protrudes from the protective cap 21. In particular, it protrudes laterally from the end wall 22 of the protective cap 21, to which it is connected via the loop-shaped section 24. It also projects with respect to a first side wall 26 depending from the end wall 22. It has a generally planar configuration with its major surface being enlarged due to the fact that it widens where it is joined to the loop-shaped section 24. Also, raised features are provided on at least one of its major surfaces, in this case in the form of ridges. All this allows a user to exert a pulling force on the separable part, this pulling force being at least partly in a direction transverse to a plane in which the loop-shaped section 24 lies, and thus also transverse to an outwardly directed face of the end wall 22. As a result, locations at which the frangible connection between the loop-shaped section 24 and the remainder of the end wall 22 is broken move along the lines of connection indicated in Fig. 9 as a pulling force is exerted on the gripping tab 23. The loop-shaped section 24 is thus separated from the end wall 22.

The loop-shaped section 24 is also separated from the attachment section 25 in the process, because it extends along a path surrounding the attachment section 25, and is provided with frangible connections on either side of the path. Moreover, a frangible connection interrupting the loop is provided. The attachment section 25 is retained to the cartridge 3, in this example to the cartridge head 8, since it is irreversible fixed to the latter.

In the illustrated example, the attachment section 25 is riveted to the cartridge head 8. In the process of manufacturing the liquid treatment cartridge 3, the protective cap 21 is placed over the cartridge head 8, such that the pin 20 passes through a hole 27 in the attachment section 25 and protrudes slightly from an exposed surface thereof. The protruding end of the pin 20 is then upset, e.g. using a heated tool, such as to rivet the attachment section to the cartridge head 8. A sonotrode can be used instead of a heated tool.

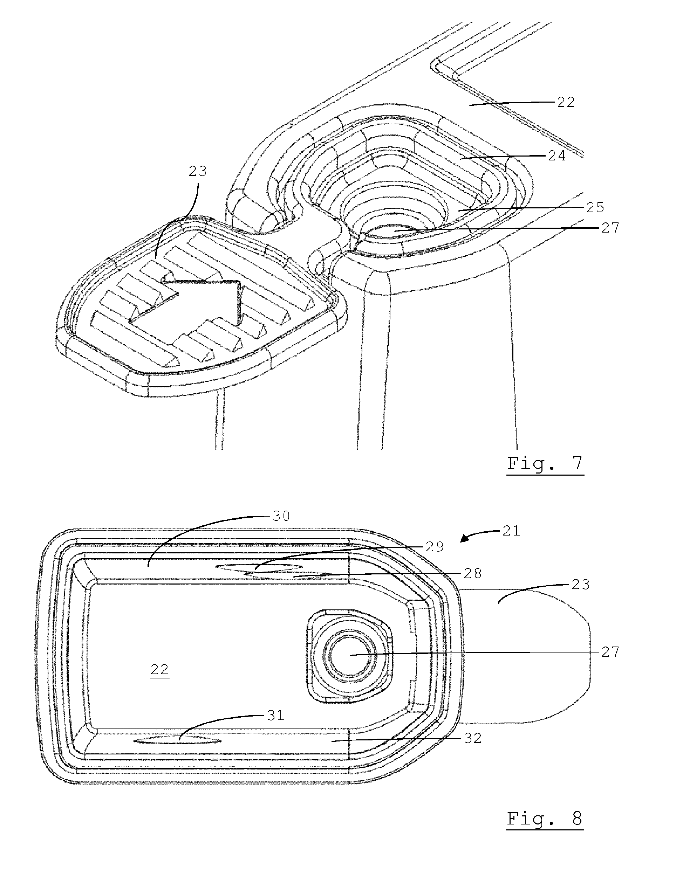

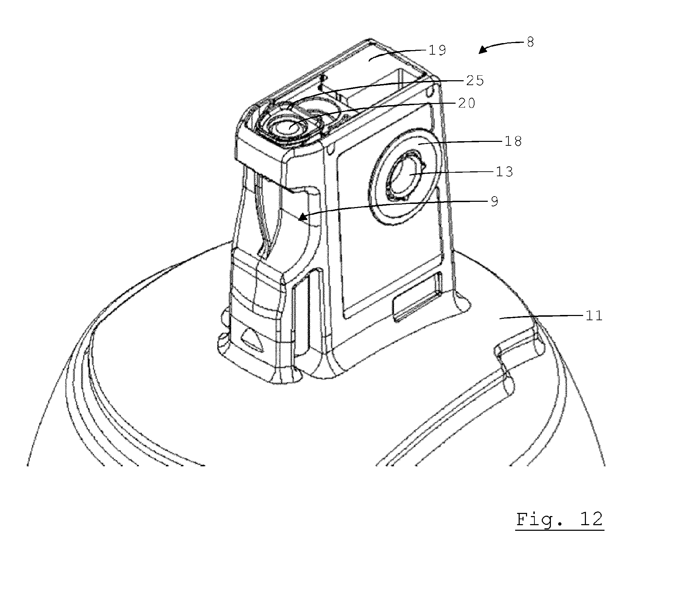

To avoid having the pin 20 or even the attachment section 25 protrude from the axial end face 19 of the cartridge head 8 when the separable part has been detached from the protective cap 21, i.e. in the state shown in Fig. 12, the attachment section 25 is set back with respect to at least an adjacent section of the outward-facing surface of the end wall 22 of the cap 21 (cf. Fig. 7). Indeed, it is set back by a distance bringing the outward-facing surface of the attachment section 25 to an axial location beyond that of an inward-facing surface of the end wall 22 of the protective cap 21. This also places it in the recess of the cartridge head 8 in which the pin 20 is provided, when the protective cap 21 is placed over the cartridge head 8.

It will be clear that the protective cap 21 is connected to the liquid treatment cartridge 3 in the state in which the latter leaves the factory for installation in the liquid treatment system 1 (Figs. 5,10,11). The connection is such that the protective cap 21 can only be removed from the liquid treatment cartridge 3 by first separating the separable part from the protective cap 21.

Once this has been done, there is an aperture in the end wall 22, but it remains usable because there are no ports in the axial end face 19 of the cartridge head 8 covered by the end wall 22 of the protective cap 21. Instead, the inlet ports 14,15 are closed by protruding features 28,29 provided on an inward-facing surface of a second side wall 30 depending from the end wall 22 of the protective cap 21. Similarly, the outlet port 13 is closed by a protruding feature 31 provided on an inward-facing surface of a third side wall 32 depending from the end wall 22 of the protective cap 21. The inward-facing surfaces of the second and third side walls 30,32 face each other. As a result, it is possible to configure the protective cap 21 to fit the cartridge head 8 such that it is deformed elastically to a slight extent as it is slid onto the cartridge head 8. The elastic force acts to urge the second and third side walls 30,32 towards each other. Combined with the elastic deformation of the sealing elements 16-18 with which the ports 13-15 are provided, this allows the protective cap 21 to close the ports 13-15 when replaced over the cartridge head 8 of a used liquid treatment cartridge 3. The water remaining therein will thus not spill out during transport of the used liquid treatment cartridge 3 to a recycling facility. The side walls 30,32 with protruding features 28,29,31 serve as latching elements for removably holding the protective cap 21 to the cartridge head 8, since they will protrude into at least the respective apertures of the sealing elements 16-18, thus preventing accidental loss of the protective cap 21 en route.

The used liquid treatment cartridge 3 with the protective cap 21 on it is easily distinguished from a new liquid treatment cartridge 3 due to the absence of the gripping tab 23 and the loop-shaped section 24 of the separable part.

The invention is not limited to the embodiments described above, which may be varied within the scope of the accompanying claims. For example, the protective cap 21 may be provided with a different type of latching mechanism for removably holding the protective cap 21 to the liquid treatment cartridge 3 when the separable part has been separated from the protective cap 21.

The attachment section 25 may be irreversibly fixed to the liquid treatment cartridge 3 in a different way, e.g. by welding or adhesive bonding. Also, it is possible to configure the separable part such that the action of pulling off the protective cap 21 separates the separable part from the protective cap 21, in which case, the separable part can consist essentially of the attachment section, for example. Where an inlet or outlet port is provided in an axial end face of the cartridge head, the separable part could be provided at an axial location short of the axial end wall of the protective cap. It is also possible to provide a snap-fit connection retaining the separable part to the liquid treatment cartridge, in particular the cartridge head part.

**LIST OF REFERENCE NUMERALS**

| | |
|---|---|
| 1 | - liquid treatment system |
| 2 | - head part |
| 3 | - liquid treatment cartridge |
| 4 | - inlet connector |
| 5 | - supply conduit |
| 6 | - outlet connector |
| 7 | - delivery conduit |
| 8 | - cartridge head |
| 9 | - locking features |
| 10a,b | - locking handles |
| 11 | - cartridge cap |
| 12 | - beaker-shaped cartridge housing part |
| 13 | - outlet port |
| 14 | - main inlet port |
| 15 | - bypass inlet port |
| 16 | - sealing element for main inlet port |
| 17 | - sealing element for bypass inlet port |
| 18 | - sealing element for outlet port |
| 19 | - axial end face of cartridge head |
| 20 | - pin |
| 21 | - protective cap |
| 22 | - end wall |
| 23 | - gripping tab |
| 24 | - loop-shaped section |
| 25 | - attachment section |
| 26 | - 1^{st} side wall |
| 27 | - hole |
| 28 | - protruding feature |
| 29 | - protruding feature |
| 30 | - 2^{nd} side wall |
| 31 | - protruding feature |
| 32 | - 3^{rd} side wall |

## Claims

1. Cap for placement on a cartridge head part (8) of a liquid treatment cartridge (3),
wherein the cartridge head part (8) includes at least one of a liquid inlet port (14,15) and a liquid outlet port (13), and
wherein the cartridge head part (8) is configured for insertion into a head part (2) of a liquid treatment system (1) to establish a liquid-tight connection between at least one of an inlet port and an outlet port of the head part (8) and a corresponding one of the ports (13-15) of the cartridge head part (8),
wherein the cap is configured to cover at least one of the ports (14,15) of the cartridge head part (8) when placed on the cartridge head part (8) with the cartridge head part (8) inserted through an aperture of the cap in an axial direction,
**characterised in that**
the cap is provided with a part (23-25) having at least one frangible connection to a remainder of the cap and including a section (25) configured to engage the liquid treatment cartridge (3) in a manner enabling it to provide an axial force opposing a force pulling the cap in the axial direction only if the at least one frangible connection is intact.

2. Cap according to claim 1,
wherein the cap is configured for use with a liquid treatment cartridge having a central axis aligned with the axial direction,
wherein the cap has an end wall (22) for at least partially covering an axial end (19) of the cartridge head part (8) and at least one side wall (26,30,32) depending from the end wall (22) for at least partially covering the cartridge head part (8) laterally,
wherein the part having at least one frangible connection to a remainder of the cap is connected to only one of the end wall (22) and the at least one side wall (26,30,32) and at least one of the other of the end wall (22) and the side wall(s) (26,30,32) is configured to cover at least one of the inlet and outlet ports (13,14,15) in a liquid-tight-manner.

3. Cap according to claim 1 or 2,
wherein the cap is configured for use with a liquid treatment cartridge (3) having a central axis aligned with the axial direction,
wherein the cap has an end wall (22) for at least partially covering an axial end (19) of the cartridge head part (8) and at least one side wall (26,30,32) depending from the end wall (22) for at least partially covering the cartridge head part (8) laterally, and
wherein at least part of the part having at least one frangible connection to a remainder of the cap is integral to the end wall (22) and connected to a remainder thereof along a line of connection.

4. Cap according to any one of the preceding claims,
wherein the part (23-25) is separable from the remainder of the cap and the section is an attachment section (25) configured for retainment of at least the attachment section (25) to the liquid treatment cartridge (3).

5. Cap according to claim 4,
wherein the separable part includes an end section (23) for providing purchase on the separable part; and
a section (24) extending along a path and provided with frangible connections on either side along the path.

6. Cap according to claim 5,
wherein the attachment section (25) is separable from the section (24) extending along the path at a frangible connection.

7. Cap according to any one of claims 4-6,
wherein the attachment section (25) is configured for being fixed, for example irreversibly fixed, to the liquid treatment cartridge (3).

8. Cap according to claim 7,
wherein the attachment section (25) includes a hole (27) for fixing the attachment section (25) to the liquid treatment cartridge (3) by upsetting a pin (20) inserted through the hole (27).

9. Cap according to any one of claims 4-8,
wherein at least part of the separable part is integral to a wall (22) of the cap and connected to a remainder thereof along a line of connection, and
wherein the attachment section (25) is set back relative to at least an adjacent section of an outward-facing surface of the remainder of the wall (22).

10. Method of placing a cap (21) according to any one of claims 4-9 on a cartridge head part (8) of a liquid treatment cartridge (3), including connecting the attachment section (25) to the liquid treatment cartridge (3).

11. Method according to claim 10,
wherein the attachment section (25) is irreversibly fixed to the liquid treatment cartridge (3)

12. Method according to claim 11,
wherein the attachment section (25) is fixed to the liquid treatment cartridge (3) by upsetting an end of a pin (20) inserted through a hole (27) in the attachment section (25).

13. Method according to claim 12,
wherein the pin (20) is a pin (20) moulded on the liquid treatment cartridge (3).

14. Liquid treatment cartridge, including:
a cartridge head part (8),
wherein the cartridge head part (8) includes at least one of a liquid inlet port (14,15) and a liquid outlet port (13), and
wherein the cartridge head part (8) is configured for insertion into a head part (2) of a liquid treatment system (1) to establish a liquid-tight connection between at least one of an inlet port and an outlet port of the head part (2) and a corresponding one of the ports (13-15) of the cartridge head part (8); and
a cap (21), placed over the cartridge head part (8) so as to cover at least one the ports (13-15) of the cartridge head part (8), **characterised in that**
the cap (21) is provided with a frangible connection between parts (21,23-25) of the cap (21) and engages the liquid treatment cartridge such as to allow removal of the cap (21) only by breaking the frangible connection.

15. Liquid treatment cartridge according to claim 14, wherein the cap (21) is a cap according to any one of claims 1-9.
